# FASCICULE DE BREVET EUROPEEN

(11) **EP 0 844 127 B1**
(45) Date de publication et mention de la délivrance du brevet: **10.10.2001**
(21) Numéro de dépôt: 97402777.3
(22) Date de dépôt: 19.11.1997
(51) Int. Cl.: B60K 20/02, G05G 1/06

(54) **Levier de manoeuvre muni d'un dispositif filtrant, et procédé de fabrication d'un tel levier**
Betätigungshebel mit einer Dämpfungsvorrichtung und Verfahren zur Herstellung von einem solchen Hebel
Operating lever provided with a damping device, and method for manufacturing such a lever

(30) Priorité: 22.11.1996 FR 9614267
(43) Date de publication de la demande: 27.05.1998
(73) Titulaire: AUTOMOBILES PEUGEOT, 75116 Paris (FR); AUTOMOBILES CITROEN, 92200 Neuilly-sur-Seine (FR)
(72) Inventeur: Federici, Jules, 25200 Montbeliard (FR)
(74) Mandataire: Gendraud, Pierre

(56) Documents cités:
- EP-A- 0 404 613
- EP-A- 0 704 334
- US-A- 4 492 129

## Description

L'invention est relative à un levier de manoeuvre muni d'un dispositif filtrant, et à un procédé de fabrication d'un tel levier.

Elle se rapporte plus précisément à un levier, notamment pour la commande d'une boîte de vitesses d'un véhicule automobile, dont un bras de manoeuvre comprend deux parties reliées, pour filtrer des vibrations, par un manchon élastique interposé radialement entre une tige d'extrémité d'une des deux parties et un tronçon tubulaire d'extrémité de l'autre partie.

Dans les leviers usuels de ce type, les deux parties sont métalliques et généralement assemblées par surmoulage du manchon entre la tige et le tronçon tubulaire préalablement fabriqués, suivi d'une vulcanisation propre à faire adhérer le manchon sur les surfaces métalliques en contact avec lui. Ce mode d'assemblage s'avère relativement complexe, notamment parce qu'il nécessite de traiter, avant le surmoulage, les surfaces métalliques destinées à adhérer au manchon, et le coût du levier est augmenté, quand il doit être équipé d'un pommeau de préhension, par la nécessité d'interposer une pièce d'accrochage entre ce dernier et la partie d'extrémité du bras de manoeuvre.

Il est connu du document US-A-4 492 129 un levier de vitesses pour véhicule automobile comprenant un premier arbre dont la partie inférieure loge coaxialement un second arbre cylindrique connecté à la transmission du véhicule, un amortisseur de vibration en caoutchouc étant intercalé entre les deux arbres.

Il est également connu du document EP-A-0 704334 un dispositif de fixation d'un pommeau de levier de commande de boite de vitesses pour véhicules automobiles comprenant une pièce en matière plastique surmoulée en bout de la partie supérieure du levier, cette pièce étant adaptée pour assurer l'emmanchement du pommeau et son démontage.

L'invention vise à réaliser un levier de manoeuvre, muni d'un dispositif filtrant et éventuellement d'un pommeau, qui soit peu coûteux et particulièrement simple à fabriquer.

Elle concerne un levier du type susmentionné, à deux parties reliées par un manchon élastique interposé radialement entre une tige d'extrémité d'une des deux parties et un tronçon tubulaire d'extrémité de l'autre partie, caractérisé en ce que la partie à tronçon tubulaire est en matière plastique, surmoulée sur le manchon préalablement fixé à la tige d'extrémité, et ce manchon présente une forme extérieure évasée qui constitue une contre-dépouille vis-à-vis du surmoulage de la partie à tronçon tubulaire de manière à assurer le maintien axial du tronçon tubulaire sur la tige.

Suivant quelques dispositions intéressantes de l'invention :

Le manchon présente un embout axial interposé entre l'extrémité libre de la tige et un fond du tronçon tubulaire, et sa face extérieure présente une forme s'évasant légèrement vers son embout.
- la partie à tronçon tubulaire comporte une portion d'extrémité opposée à ce tronçon pourvue de moyens d'accrochage d'un pommeau, venus de moulage ;
- la tige d'extrémité et la face intérieure du manchon présentent des formes complémentaires s'évasant légèrement vers l'extrémité de la tige ;
- la partie munie de la tige d'extrémité est aussi réalisée en matière plastique, par exemple monopièce avec une portion sphérique d'articulation du levier et avec un bras de commande de celui-ci ;
- le manchon comporte des nervures longitudinales intérieures engagées dans des rainures longitudinales pratiquées dans la tige d'extrémité ;
- le manchon comporte des nervures longitudinales extérieures engagées dans des rainures complémentaires formées par surmoulage dans le tronçon tubulaire.

L'invention concerne également un procédé de fabrication d'un levier de manoeuvre du type susmentionné, consistant à surmouler la partie à tronçon tubulaire sur la partie munie de la tige préalablement équipée du manchon réalisé par surmoulage sur la tige, ou séparément puis fixé sur la tige par emmanchement.

Deux modes de réalisation d'un levier selon l'invention sont décrits ci-après, avec référence aux dessins annexés parmi lesquels :
- la figure 1 est une vue latérale d'un levier de manoeuvre à dispositif filtrant et propre à être équipé d'un pommeau ;
- la figure 2 est une vue partielle à plus grande échelle d'un levier selon un premier mode de réalisation, en coupe axiale suivant la ligne II-II de la figure 1 ;
- la figure 3 est une vue en coupe suivant la ligne III-III de la figure 2 ;
- la figure 4 est une vue en demi-coupe axiale d'une tige d'extrémité d'une partie d'un levier selon un second mode de réalisation ;
- la figure 5 est une vue de dessus de la tige de la figure 4 ;
- la figure 6 est une vue en demi-coupe axiale d'un manchon filtrant pour le second mode de réalisation ;
- les figures 7 et 8 sont des vues en coupe transversale, respectivement selon les lignes VII-VII et VIII-VIII de la figure 6.

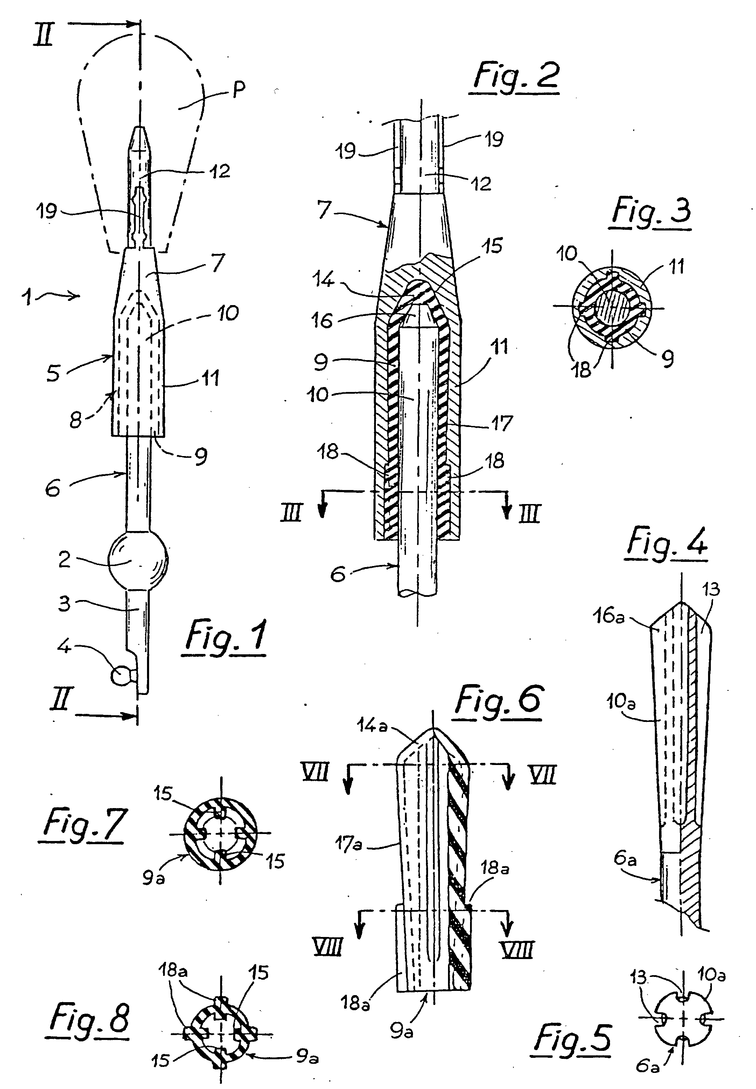

On voit à la figure 1 un levier de manoeuvre 1 comportant, de part et d'autre d'une portion sphérique 2 pour son articulation, un bras de commande 3 propre à s'articuler par une rotule 4 avec un élément non représenté de commande d'un organe tel qu'une boîte de vitesses de véhicule, et un bras de manoeuvre 5 comprenant deux parties 6 et 7 reliées par un dispositif 8 propre à filtrer des vibrations.

Ce dispositif comporte un manchon en matière élastique 9 interposé radialement entre une tige d'extrémité 10 de la partie 6 reliée à la portion sphérique 2 et un tronçon tubulaire 11 d'extrémité de la partie 7 dont le tronçon extrême opposé 12 est propre à recevoir un pommeau P de préhension du levier.

Selon le mode de réalisation des figures 2 et 3, la tige d'extrémité 10 est cylindrique et solidaire d'une partie 6 métallique, et le manchon 9 est réalisé de façon connue par surmoulage sur la tige 10 et présente une forme extérieure évasée. L'articulation sphérique 2 est alors de préférence en matière plastique rigide, rapportée par surmoulage sur une tige métallique constituant à la fois le bras de commande 3 et la partie 6 du bras de manoeuvre 5.

Selon le mode de réalisation des figures 4 et 8, la partie 6a du bras de manoeuvre est réalisée en matière plastique rigide, de préférence monopièce avec l'articulation sphérique 2 et avec le bras de commande 3 et la rotule 4 ; la tige d'extrémité 10a, alors en matière plastique, est non plus cylindrique mais présente une forme (figure 4) s'évasant légèrement vers son extrémité libre, et comporte des rainures longitudinales 13, par exemple quatre comme visible sur la figure 5.

Le manchon 9a (figures 6 à 8) présente alors une forme intérieure complémentaire de celle extérieure de la tige 10a, c'est-à-dire s'évasant vers un embout axial 14a et comprenant quatre nervures longitudinales 15, propres à s'engager dans les quatre rainures 13 de la tige 10a pour assurer l'immobilisation en rotation du manchon 9 sur la tige 10a. Cet engagement s'effectue lors de l'emmanchement axial sur celle-ci du manchon réalisé en caoutchouc vulcanisé ou élastomère thermoplastique.

Dans les deux modes de réalisation, la partie 7 du bras de manoeuvre 5 est, selon l'invention, réalisée en matière plastique rigide (de préférence thermoplastique renforcée) par surmoulage sur le manchon 9 ou 9a préalablement disposé sur la tige 10 ou 10a par surmoulage ou par emmanchement .

Pour garantir le maintien axial de la partie 7 sur la partie 6 du bras 5, donc du tronçon tubulaire 11 sur la tige 10 ou 10a, le manchon 9 ou 9a comporte d'une part un embout axial 14, 14a interposé entre l'extrémité libre 16 ou 16a de la tige 10 ou 10a et un fond 15 que comporte le tronçon tubulaire, et d'autre part une forme extérieure 17, 17a s'évasant légèrement vers l'embout axial 14,14a, le fond 15 et l'extrémité 16, 16a.

Le manchon 9 ou 9a comporte aussi extérieurement quelques nervures longitudinales 18 ou 18a -par exemple quatre- propres à assurer l'immobilisation en rotation de la partie 7 par rapport à la partie 6 ou 6a grâce à leur engagement dans des rainures correspondantes formées dans le tronçon tubulaire 11 lors du surmoulage.

La forme extérieure évasée 17,17a du manchon constitue une contre-dépouille vis-à-vis du surmoulage de la partie 7, effectué de préférence par injection de matière plastique par l'extrémité libre du tronçon 12, à l'opposé du tronçon tubulaire 11.

Ce tronçon 12, venu de moulage avec toute la partie 7 du bras 5, est muni de guides saillants 19 adaptés pour l'accrochage d'un pommeau P.

Il résulte de cette réalisation en matière plastique de la partie 7 du bras de manoeuvre 5 que le levier est particulièrement léger et peu coûteux, notamment grâce à la fixation directe du pommeau sur cette partie 7 contenant le manchon filtrant.

De plus, le procédé de fabrication du levier consistant à surmouler la partie 7 en matière plastique sur le manchon préalablement disposé sur la tige 10 ou 10a s'avère plus simple que les procédés connus mentionnés plus haut, et le retrait par refroidissement de la matière plastique du tronçon tubulaire en fin de surmoulage procure en outre un serrage sur le manchon qui garantit au mieux sa solidarisation avec les deux parties 6 et 7 du bras 5.

## Revendications

1. Levier de manoeuvre (1) dont un bras (5) comprend deux parties ( 6,7) reliées par un manchon élastique (9;9a) interposé radialement entre une tige d'extrémité (10;10a) d'une (6;6a) des deux parties et un tronçon tubulaire (11) de l'autre partie (7),
**caractérisé en ce que** la partie (7) à tronçon tubulaire (11) est en matière plastique, surmoulée sur le manchon (9;9a) préalablement fixé à la tige d'extrémité (10;10a), et ce manchon présente une forme extérieure (17;17a) évasée qui constitue une contre-dépouille vis-à-vis du surmoulage de la partie (7) à tronçon tubulaire de manière à assurer le maintien axial du tronçon tubulaire (11) sur la tige (10;10a).

2. Levier selon la revendication 1,
**caractérisé en ce que** la partie (7) à tronçon tubulaire (11) comporte une portion d'extrémité (12) opposée à ce tronçon pourvue de moyens d'accrochage (19) d'un pommeau (P), venus de moulage.

3. Levier selon l'une des revendications 1 et 2,
**caractérisé en ce que** le manchon (9;9a) comporte un embout axial (14;14a) interposé entre l'extrémité libre (16;16a) de la tige (10;10a) et un fond (15) du tronçon tubulaire (11).

4. Levier selon l'une des revendications précédentes,
**caractérisé en ce que** la tige d'extrémité (10a) et la face intérieure du manchon (9a) présentent des formes complémentaires s'évasant légèrement vers l'extrémité (16a) de la tige.

5. Levier selon l'une des revendications précédentes,
**caractérisé en ce que** la partie (6a) munie de la tige d'extrémité (10a) est aussi réalisée en matière plastique, par exemple monopièce avec une portion sphérique (2) d'articulation du levier (1) et avec un bras de commande (3) de celui-ci.

6. Levier selon l'une des revendications précédentes,
**caractérisé en ce que** le manchon (9a) comporte des nervures longitudinales interieures (15) engagées dans des rainures longitudinales (13) pratiquées dans la tige d'extrémité (10a).

7. Levier selon l'une quelconque des revendications précédentes
**caractérisé en ce que** le manchon (9;9a) comporte des nervures longitudinales extérieures (18;18a) engagées dans des rainures complémentaires formées par surmoulage dans le tronçon tubulaire (11).

8. Procédé de fabrication d'un levier selon l'une quelconque des revendications précédentes,
**caractérisé en ce qu'**il consiste à surmouler la partie (7) à tronçon tubulaire (11) sur la partie (6;6a) munie de la tige (10,10a) préalablement équipée du manchon (9;9a) présentant une forme extérieure (17;17a) évasée.

9. Procédé selon la revendication 8,
**caractérisé en ce que** le manchon (9) est réalisé par surmoulage sur la tige (10).

10. Procédé selon la revendication 8,
**caractérisé en ce que** le manchon (9a) est réalisé séparément puis fixé sur la tige (10a) par emmanchement.

## Patentansprüche

1. Bedienungshebel (1), bei dem ein Arm (5) zwei über eine elastische Manschette (9; 9a) verbundene Teile (6, 7) aufweist, die radial zwischen eine Endstange (10; 10a) eines der beiden Teile (6; 6a) und einen rohrförmigen Endabschnitt des anderen Teils (7) eingefügt ist,
**dadurch gekennzeichnet, daß** der Teil (7) mit rohrförmigem Abschnitt (11) aus Kunststoffmaterial besteht, das auf die vorher an der Endstange (10; 10a) befestigte Manschette (9; 9a) aufgeformt wird, und daß diese Manschette eine äußere ausgeweitete Form (17; 17a) aufweist, die eine Formschräge gegenüber der Aufformung des Teils (7) mit rohrförmigem Abschnitt bildet, um den axialen Halt des rohrförmigen Abschnitts (11) auf der Stange (10; 10a) zu gewährleisten.

2. Hebel nach Anspruch 1, **dadurch gekennzeichnet, daß** der Teil (7) mit rohrförmigem Abschnitt (11) einen diesem Abschnitt entgegengesetzt liegenden Endabschnitt (12) aufweist, der mit Befestigungsmitteln (19) für einen Knopf (P) versehen ist, die aus einem Stück mit ihm hergestellt werden.

3. Hebel nach einem der Ansprüche 1 und 2, **dadurch gekennzeichnet, daß** die Manschette (9; 9a) ein axiales Ansatzstück (14; 14a) aufweist, das zwischen das freie Ende (16; 16a) der Stange (10; 10a) und einen Boden (15) des rohrförmigen Abschnitts (11) eingefügt ist.

4. Hebel nach einem der vorhergehenden Ansprüche, **dadurch gekennzeichnet, daß** die Endstange (10a) und die Innenseite der Manschette (9a) komplementäre Formen aufweisen, die sich zum Ende (16a) der Stange hin geringfügig ausweiten.

5. Hebel nach einem der vorhergehenden Ansprüche, **dadurch gekennzeichnet, daß** auch der mit der Endstange (10a) versehene Teil (6a) aus Kunststoff ist, zum Beispiel aus einem Stück mit einem Kugelgelenk-Abschnitt (2) des Hebels (1) und mit einem Steuerarm (3) dieses Hebels.

6. Hebel nach einem der vorhergehenden Ansprüche, **dadurch gekennzeichnet, daß** die Manschette (9a) innere Längsrippen (15) aufweist, die in Längsnuten (13) in der Endstange (10a) eingeführt sind.

7. Hebel nach einem der vorhergehenden Ansprüche, **dadurch gekennzeichnet, daß** die Manschette (9; 9a) äußere Längsrippen (18; 18a) aufweist, die in komplementäre Nuten eingeführt sind, welche durch Aufformen im rohrförmigen Abschnitt (11) ausgebildet werden.

8. Verfahren zur Herstellung eines Hebels nach einem der vorhergehenden Ansprüche,
**dadurch gekennzeichnet, daß** es darin besteht, den Teil (7) mit rohrförmigem Abschnitt (11) auf den mit der Stange (10; 10a), die vorher mit der eine ausgeweitete äußere Form (17; 17a) aufweisenden Manschette (9; 9a) ausgestattet wurde, versehenen Teil (6; 6a) aufzuformen.

9. Verfahren nach Anspruch 8, **dadurch gekennzeichnet, daß** die Manschette (9) durch Aufformen auf die Stange (10) hergestellt wird.

10. Verfahren nach Anspruch 8, **dadurch gekennzeichnet, daß** die Manschette (9a) getrennt hergestellt und dann durch Aufschieben auf der Stange (10a) befestigt wird.

## Claims

1. Operating lever (1), one arm (5) of which comprises two portions (6, 7) connected by a resilient sleeve (9; 9a) interposed radially between an end rod (10; 10a) of one (6; 6a) of the two portions and a tubular section (11) of the other portion (7),
**characterised in that** the portion (7) with the tubular section (11) is made of plastic material, moulded from a casting over the sleeve (9; 9a), which is fixed beforehand to the end rod (10; 10a), and this sleeve has a flared outer shape (17; 17a) that constitutes a reverse taper with respect to the moulding of the portion (7) with the tubular section so as to ensure that the tubular section (11) is held axially on the rod (10; 10a).

2. Lever according to Claim 1,
**characterised in that** the portion (7) with the tubular section (11) comprises an end portion (12) opposite this section provided with means (19) for fastening a knob (P), which means are moulded.

3. Lever according to one of Claims 1 and 2,
**characterised in that** the sleeve (9; 9a) comprises an axial endpiece (14; 14a) interposed between the free end (16; 16a) of the rod (10; 10a) and a bottom (15) of the tubular section (11).

4. Lever according to one of the preceding claims,
**characterised in that** the end rod (10a) and the inner face of the sleeve (9a) have complementary shapes flaring slightly towards the end (16a) of the rod.

5. Lever according to one of the preceding claims,
**characterised in that** the portion (6a) provided with the end rod (10a) is also made of plastic material, for example made in a piece with a spherical hinge portion (2) of the lever (1) and with an arm (3) for controlling the latter.

6. Lever according to one of the preceding claims,
**characterised in that** the sleeve (9a) comprises inner longitudinal ribs (15) engaged in longitudinal grooves (13) made in the end rod (10a).

7. Lever according to any one of the preceding claims,
**characterised in that** the sleeve (9; 9a) comprises outer longitudinal ribs (18; 18a) engaged in complementary grooves formed by moulding from a casting in the tubular section (11).

8. Method of producing a lever according to any one of the preceding claims,
**characterised in that** it consists in moulding from a casting the portion (7) with the tubular section (11) over the portion (6; 6a) provided with the rod (10; 10a) previously fitted with the sleeve (9; 9a), having a flared outer shape (17; 17a).

9. Method according to Claim 8,
**characterised in that** the sleeve (9) is made by moulding from a casting over the rod (10).

10. Method according to Claim 8,
**characterised in that** the sleeve (9a) is produced separately then fixed to the rod (10a) by force-fitting.
